## Europäisches Patentamt
## European Patent Office
## Office européen des brevets

(11) Numéro de publication: **0 004 814**
**B1**

(12) **FASCICULE DE BREVET EUROPEEN**

(45) Date de publication du fascicule de brevet: **06.05.81**

(21) Numéro de dépôt: **79400204.8**

(22) Date de dépôt: **29.03.79**

(51) Int. Cl.³: **F 16 G   15/06**

(54) **Manille perfectionnée.**

(30) Priorité: **31.03.78 FR 7810340**
**21.07.78 FR 7822535**
**05.07.78 FR 7820726**

(43) Date de publication de la demande:
**17.10.79 Bulletin 79/21**

(45) Mention de la délivrance du brevet:
**06.05.81 Bulletin 81/18**

(84) Etats Contractants Désignés:
**BE CH DE GB IT LU NL SE**

(56) Documents cités:
**DE - C - 876 045**
**FR - A - 2 228 397**

(73) Titulaire: **STAS SOCIETE TECHNIQUE D'ACCESSOIRES SPECIALISES Société anonyme dite:**
**77, rue Henri-Brisson**
**F-78500 Sartrouville (FR)**

(72) Inventeur: **Archer, Michel**
**55, Avenue des Gressets**
**F-78170 La Celle St. Cloud (FR)**

(74) Mandataire: **Boivin, Claude**
**9, rue Edouard-Charton**
**F-78000 Versailles (FR)**

Courier Press, Leamington Spa, England.

Manille perfectionnée

L'invention concerne une manille dont les deux branches comportent chacune un trou non taraudé pour le passage d'un manillon, les deux trous étant coaxiaux, et sur l'une des branches de laquelle est montée une rondelle percée.

Les deux branchés d'une manille usuelle comportent deux trous coaxiaux qui permettent le passage du manillon et dont l'un est taraudé Une manille de ce genre est décrite notamment dans le brevet français 2 228 397.

Le trou non taraudé a en général un diamètre notablement plus grand que celui du manillon de façon à permettre une mise en place facile de ce manillon. Mais lorsque le manillon est soumis à une charge, il fléchit alors de façon à s'appliquer sur la paroi du trou non taraudé; au bout d'un certain temps, la manille casse. Le brevet allemand 876 045 montre une manille dont les deux branches comportent chacune un trou non taraudé pour le passage de manillons, les duex trous étant coaxiaux. L'une des branches de la manille est munie d'un bossage extérieur creux dans lequel est logé un ressort hélicoïdal exerçant une poussée sur le manillon et tendant à engager une dent, prévue à l'extrémité de celui-ci, dans une rondelle percée montée pivotante à l'extrémité de l'autre branche. En position de verrouillage, le trou de la rondelle est coaxial aux trous des branches et cette rondelle maintient le manillon en place. Maise la fixation du manillon ne se fait pas du tout comme dans les manilles usuelles, ce qui peut troubler l'utilisateur. Par ailleurs, la présence du bossage dans lequel est logé le ressort augmente notablement l'encombrement de la manille, ce qui est un inconvénient pour le levage.

La présente invention a pour objet une manille dans laquelle le fléchissement du manillon est évité et qui s'utilise comme une rondelle usuelle.

Cette manille est caractérisée en ce que la rondelle est munie d'un trou taraudé et est montée flottante sur ladite branche, de façon que son trou taraudé soit approximativement coaxial avec le trou non taraudé de ladite branche.

Le manillon traverse les deux trous non taraudés de la manille et son extrémité est vissée dans le trou taraudé de la rondelle. Lorsqu'il est sous charge, la rondelle se déplace de façon à lui permettre de s'appliquer simultanément sur les parois des deux trous non taraudés, de sorte qu'il ne fléchit pas et que sa durée de vie est considérablement augmentée.

L'un des éléments constitués par la rondelle et la branche de la manille peut porter un téton, engagé avec jeu dans un trou de l'autre élément.

Il peut arriver que, lorsqu'on retire le manillon, la rondelle se sépare de la manille et tombe à terre.

Pour éviter cet inconvénient, la manille peut porter un étrier de maintien de la rondelle, cet étrier étant de préférence prévu au droit du téton ou de son trou de passage.

Pour éviter que cet étrier ne soit arraché lorsque la manille est, par exemple, trainée sur le sol, la rondelle comporte avantageusement une encoche dans laquelle l'étrier est logé.

Selon une autre caractéristique de la présente invention, la rondelle est montée pivotante avec jeu sur un bossage prévu sur la branche correspondante de la manille. Cette rondelle ne risque ainsi pas de se séparer de la manille.

Lorsqu'un effort s'exerce sur le manillon d'une manille, cet effort tend à déformer les branches de cette manille et à rapprocher leurs extrémités l'une de l'autre. Ce défaut est partiellement évité dans la manille selon l'invention par la rondelle qui renforce la branche sur laquelle elle est appliquée.

Selon une autre caractéristique de la présente invention, qui empêche pratiquement toute déformation de la manille, le manillon comporte une collerette d'appui dont les dimensions sont sensiblement égales à celles de la branche de la manille, sur laquelle elle est appliquée. Les deux branches de la manille sont ainsi renforcées, l'une par la rondelle et l'autre par la collerette, de sorte que la manille ne peut se déformer.

On a décrit ci-après, à titre d'exemples non limitatifs, des modes de réalisation de la manille selon l'invention avec référence aux dessins annexés dans lesquels:

La Figure 1 est une vue en élévation d'un premier mode de réalisation de la manille,

La Figure 2 est une vue en élévation latérale de ce premier mode de réalisation,

Les Figures 3 et 4 sont des vues analogues aux Figures 1 et 2 d'un deuxième mode de réalisation de la manille,

La Figure 5 est une vue en coupe d'un détail d'une variante,

La Figure 6 est une vue en élévation d'un troisième mode de réalisation de la manille,

La Figure 7 en est une vue en élévation latérale suivant la flèche $F_1$ de la Figure 6,

La Figure 8 en est une vue en élévation latérale suivant la flèche $F_2$ de la figure 6.

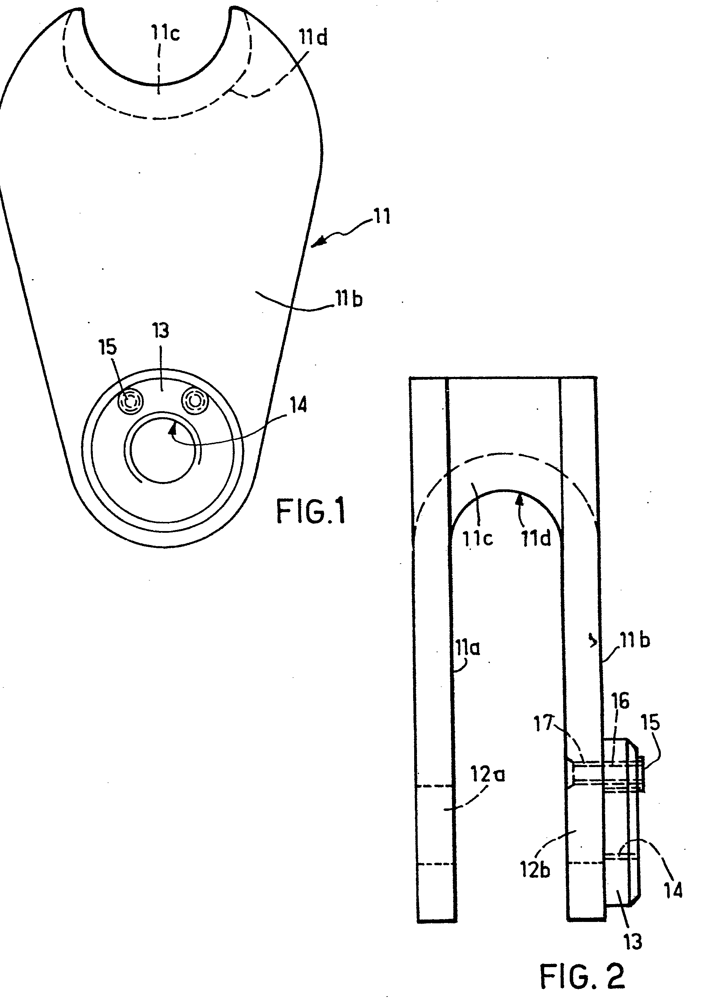

Telle qu'elle est représentée aux Figures 1 et 2, la manille 11 est constituée par une plaque métallique déformée à chaud. Cette manille comporte deux branches latérales relativement larges 11a et 11b qui sont reliées l'une à l'autre par une partie 11c munie d'une gorge 11d en arc de cercle constituant une demi-cosse.

Les branches 11a et 11b sont percées chacune d'un trou 12a ou 12b pour le passage du manillon, les trous 12a et 12b étant coaxiaux. Une rondelle 13 munie d'un trou taraudé 14 est disposée sur la face extérieure de la branche 11*b* de façon que le trou 14 soit sensiblement dans l'axe du trou 12*b*. Cette rondelle est fixée à la branche 11*b* de la manille par des axes 15 traversant avec jeu des perçages 16 de la rondelle et rivés non serrés; ils pourraient également traverser avec jeu les perçages 17 de la branche 11*b*. Dans ces conditions, la rondelle 13 est flottante et peut ainsi se déplacer dans une certaine mesure parallèlement à elle-même.

Lorsque le manillon est engagé dans les trous 12*a* et 12*b* et vissé dans le trou 14 de la rondelle et qu'il est soumis à une charge, la rondelle 13 se déplace de façon que le manillon vienne reposer sur la paroi du trou 12*b*; on évite ainsi tout risque de rupture du manillon au droit du filetage.

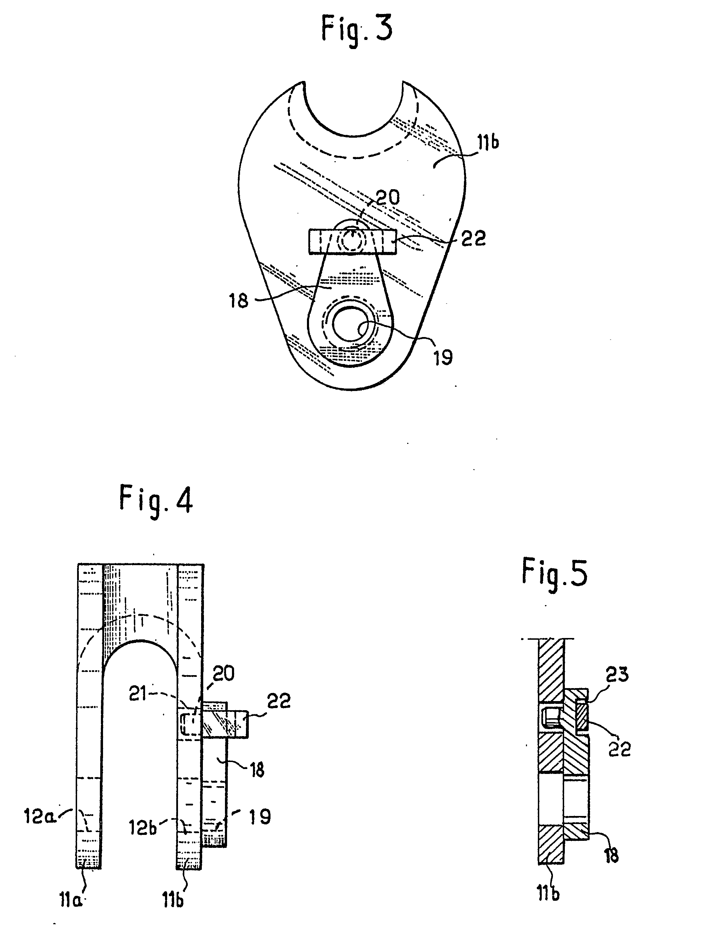

Dans le mode de réalisation des Figures 3 et 4, la manille est semblable dans ses grandes lignes à celle des Figures 1 et 2. Mais la rondelle 13 est remplacée par une rondelle 18 en forme de poire; celle-ci est munie dans sa partie large, d'un trou taraudé 19 et comporte, dans sa partie étroite un téton 20 faisant saillie par rapport à la face interne de celle-ci. Le téton 20 est engagé avec un jeu relativement important dans un trou 21 de la branche latérale 11*b* de la manille. Lorsque le manillon est engagé dans les trous 12*a* et 12*b*, et vissé dans le trou 19 de la rondelle, celle-ci se déplace de façon que le manillon vienne reposer sur la paroi du trou 12*b*. Le trou 21 étant situé dans une partie relativement large de la manille n'affaiblit pas celle-ci; de plus, le téton 20 étant plus éloigné de l'axe du trou 19 que les rivets 15 de l'axe du trou 14, est soumis à un effort moins important lors du serrage du manillon et ne risque donc pas d'être cisaillé.

Un étrier 22 est soudé sur la face externe de la branche 11*b*, au droit du trou 21; l'extrémité étroite de la rondelle 18 est engagée dans cet étrier, de sorte que ce dernier maintient la rondelle et l'empêche de se séparer de la manille.

Dans la variante de la Figure 5, l'étrier 22 est engagé dans une encoche 23 prévue sur la face extérieure de la rondelle 18. Cette encoche a une profondeur au moins égale à l'épaisseur de l'étrier de façon que ce dernier ne fasse pas saillie par rapport à la manille; sa largeur est supérieure à celle dudit étrier de façon à permettre à la rondelle de se déplacer.

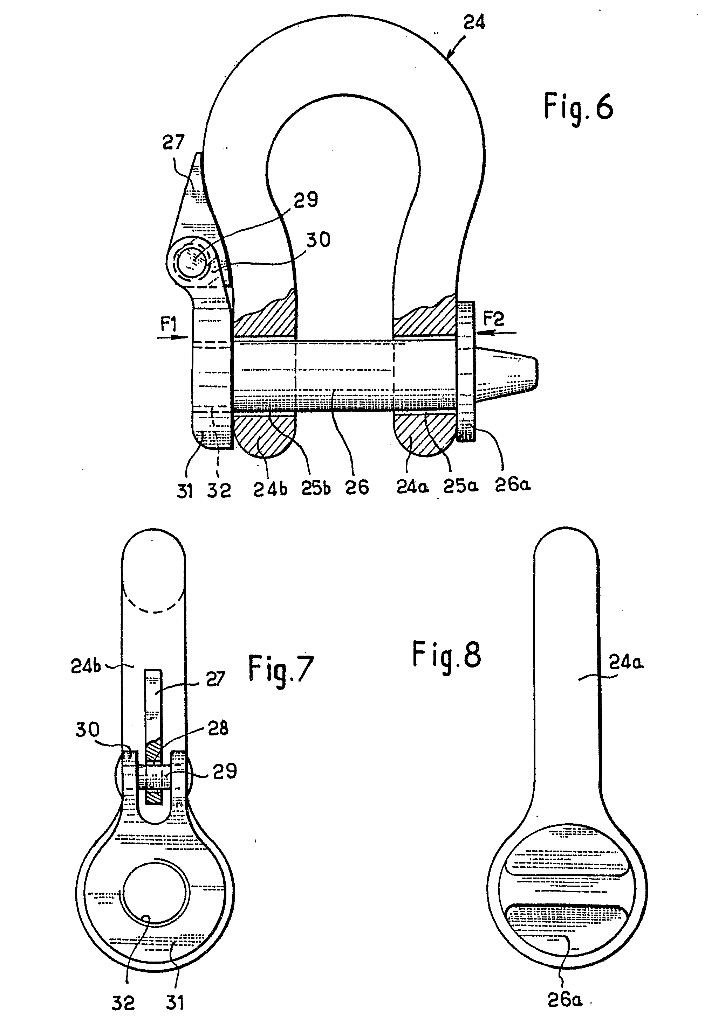

La manille 24 représentée aux Figures 6 à 8 est de forme usuelle mais les extrémités de ses branches latérales 24*a* et 24*b*, qui sont de forme circulaire, sont percées chacune d'un trou 25*a* ou 25*b* pour le passage du manillon 26. Celui-ci comporte une collerette d'appui 26*a* dont le diamètre est délibérément augmenté par rapport à celui des collerettes des manillons usuels; ce diamètre est ici sensiblement égal à celui de l'extrémité de la branche 24*a*.

Un bossage 27 est estampé sur la face extérieure de la branche 24*b*. Ce bossage comporte un trou 28 qui est traversé par un axe 29 servant de pivot à des oreilles 30 d'une rondelle 31. Celle-ci est munie d'un trou taraudé 32 qui est approximativement coaxial au trou 25*b* de la branche 24*b* et dans lequel peut se visser l'extrémité filetée du manillon 26. Le diamètre du trou 28 est supérieur à celui de l'axe 29, ce qui permet un certain déplacement de la rondelle 31.

Comme dans les modes de réalisation précédents, la rondelle 31 peut se déplacer, lorsque le manillon 26 est soumis à une charge, de façon que ce manillon vienne reposer sur la paroi du trou 25*b*.

Il va de soi que la présente invention ne doit pas être considérée comme limitée aux modes de réalisation décrits et représentés, mais en couvre, au contraire, toutes les variantes.

**Revendications**

1. Manille dont les deux branches (11*a* et 11*b* ou 24*a* et 24*b*) comportent chacune un trou non taraudé (12*a*, 12*b* ou 25*a*, 25*b*) pour le passage d'un manillon (26), les deux trous (12*a* et 12*b* ou 25*a* et 25*b*) étant coaxiaux, et sur l'une (11*b* ou 24*b*) des branches de laquelle est montée une rondelle percée (13, 18 ou 31), caractérisée en ce que la rondelle (13, 18 ou 31) est munie d'un trou taraudé (14, 19 ou 32) et est montée flottante sur ladite branche (11*b* ou 24*b*) de façon que son trou taraudé (14, 19 ou 32) soit approximativement coaxial avec le trou non taraudé (12*b* ou 25*b*) de ladite branche.

2. Manille selon la revendication 1, caractérisée en ce que la rondelle (13) est fixée à la branche de la manille par des axes (15) traversant avec jeu soit la branche soit la rondelle, et rivés non serrés.

3. Manille selon la revendication 1, caractérisée en ce que l'un des éléments constitués par la rondelle et la branche de la manille porte un téton (20) engagé avec jeu dans un trou (21) de l'autre élément.

4. Manille selon l'une des revendications 1 à 3, caractérisée en ce que la rondelle est en forme de poire le trou taraudé étant ménagé dans sa partie large.

5. Manille selon la revendication 3 et 4, caractérisée en ce que le téton (20) est fixé sur la rondelle (18) dans la partie étroite de celle-ci.

6. Manille selon l'une des revendications 3 à 5, caractérisée en ce qu'elle porte un étrier de maintien (22) de la rondelle (18), cet étrier étant de préférence prévu au droit du téton (20) ou de son trou de passage.

7. Manille selon la revendication 6, caractérisée en ce que la rondelle (18) comporte une encoche (23) dans laquelle l'étrier est logé.

8. Manille selon la revendication 1, caractérisée en ce que la rondelle (31) est montée pivotante avec jeu sur un bossage (27) prévu sur la branche correspondante de la manille.

9. Manille selon l'une quelconque des revendications précédentes, caractérisée en ce que son manillon (26) comporte une collerette d'appui (26a) dont les dimensions sont sensiblement égales à celles de la branche de la manille, sur laquelle elle est appliquée.

**Claims**

1. Shackle of which the two limbs (11a and 11b) or (24a and 24b) each comprise a non-tapped hole (12a, 12b) or (25a, 25b) for the passage of a shackle pin (26), the two holes (12a and 12b) or (25a and 25b) being coaxial, and on the one (11b) or other (24b) of the arms of which is mounted an apertured washer (13, 18 or 31), characterised in this that the washer (13), (18) or (31) is provided with a tapped bore (14), (19) or (32) and is freely mounted on the said arm (11b) or (24b) in such a manner that its tapped bore (14), (19) or (32) is approximately coaxial with the non-tapped hole (12b or 25b) of the said limb.

2. Shackle according to claim 1, characterised in this that the washer (13) is secured to the limb of the shackle by pins (15) traversing with clearance either the limb or the washer, and non-tightly held.

3. Shackle according to claim 1, characterised in this that the one of the members constituted by the washer and the limb of the shackle carries a head (20) engaged with clearance in an aperture (21) of the other member.

4. Shackle according to one of claims 1 to 3, characterised in this that the washer is of pear shape, the tapped bore being provided in its wider part.

5. Shackle according to claim 3 and 4, characterised in this that the head (20) is secured to the washer (18) at the narrow part of the latter.

6. Shackle according to one of claims 3 to 5, characterised in this that it carries a support strap (22) for the washer (18), this strap being preferably provided in the region of the head (20) or of its passage aperture.

7. Shackle according to claim 6, characterised in this that the washer (18) comprises a notch (23) in which the strap is located.

8. Shackle according to claim 1, characterised in this that the washer (31) is pivotally mounted with clearance on a lug (27) provided on the corresponding limb of the shackle.

9. Shackle according to one of the preceding claims, characterised in this that its shackle pin (26) comprises a stop collar (26a) of which the dimensions are substantially equal to those of the limb of the shackle, to which it is applied.

**Patentansprüche**

1. Schäkel, dessen beide Schenkel (11a und 11b) oder (24a und 24b) je eine Bohrung (12a, 12b) oder (25a, 25b) ohne Innengewinde zur Aufnahme eines Schäkelbolzens (26) aufweisen, wobei die beiden Bohrungen (12a und 12b) oder (25a und 25b) koaxial zueinander ausgerichtet sind und an einem der beiden Schenkel (11b) oder (24b) des Schäkels eine Lochscheibe (13, 18 oder 31) gehalten ist, dadurch gekennzeichnet, daß die Lochscheibe (13), (18) oder (31) eine mit einem Innengewinde versehene Bohrung (14), (19) oder der (32) aufweist und am Schenkel (11b) oder (24b) des Schäkels in der Weise beweglich gehaltert ist, daß ihre mit dem Innengewinde versehene Bohrung (14), (19) oder (32) angenähert koaxial zu der kein Innengewinde aufweisenden Bohrung (12b oder 25b) des Schenkels (11b) oder (24b) ausgerichtet ist.

2. Schäkel nach Anspruch 1, dadurch gekennzeichnet, daß die Lochscheibe (13) durch Bolzen (15) am Schenkel des Schäkels gehalten ist, die entweder den Schenkel oder die Lochscheibe mit Spiel durchgreifen und so vernietet sind, daß die Lochscheibe und der Schenkel gegeneinander beweglich bleiben.

3. Schäkel nach Anspruch 1, dadurch gekennzeichnet, daß entweder die Lochscheibe oder der Schenkel des Schäkels einen Zapfen (20) tragen, der mit Spiel in eine Bohrung (21) des jeweils anderen Elementes, nämlich der Lochscheibe oder des Schenkels, eingreift.

4. Schäkel nach einem der Ansprüche 1 bis 3, dadurch gekennzeichnet, daß die Lochscheibe birnenfömig ausgebildet ist und die Gewindebohrung im breiteren Teil der Lochscheibe angeordnet ist.

5. Schäkel nach den Ansprüchen 3 und 4, dadurch gekennzeichnet, daß der Zapfen (20) am schmalen Teil der birnenförmigen Lochscheibe (18) befestigt ist.

6. Schäkel nach einem der Ansprüche 3 bis 5, dadurch gekennzeichnet, daß der Schäkel einen Haltebügel (22) für die Lochscheibe (18) trägt, wobei dieser Haltebügel vorzugsweise den Zapfen (20) oder seine Führungsbohrung quer übergreift.

7. Schäkel nach Anspruch 6, dadurch gekennzeichnet, daß in der Lochscheibe (18) eine Ausnehmung (23) ausgebildet ist, in die der Haltebügel eingreift.

8. Schäkel nach Anspruch 1, dadurch gekennzeichnet, daß die Lochscheibe (31) schwenkbar und mit Spiel an einem Ansatz (27) angelenkt ist, der an dem entspechenden Schenkel des Schäkels ausgebildet ist.

9. Schäkel nach einem der vorhergehenden Ansprüche, dadurch gekennzeichnet, daß der Schäkelbolzen (26) einen Flansch (26a) aufweist, dessen Abmessungen im wesentlichen gleich den Abmessungen des Schenkels des Schäkels sind, auf dem er aufliegt.

FIG.1

FIG. 2

## Fig. 3

## Fig. 4

## Fig. 5

2

Fig.6

Fig.7

Fig.8

3